# EUROPEAN PATENT SPECIFICATION

(11) **EP 3 778 114 B1**
(45) Date of publication and mention of the grant of the patent: **23.10.2024**
(21) Application number: 19820387.9
(22) Date of filing: 20.05.2019
(51) Int. Cl.: B23Q 3/06, B23Q 17/00, F15B 15/14, B23Q 3/08, B25B 5/06, F15B 15/06, F15B 15/28

(54) **CYLINDER**
ZYLINDER
VÉRIN

(30) Priority: 12.06.2018 JP 2018111564; 16.10.2018 JP 2018195181
(43) Date of publication of application: 17.02.2021
(60) Divisional application: 24198699.1
(73) Proprietor: Kosmek Ltd., Hyogo 651-2241 (JP)
(72) Inventor: YOSHIMI, Masahiro, Kobe City Hyogo 651-2241 (JP)
(74) Representative: Kramer Barske Schmidtchen Patentanwälte PartG mbB
(86) International application number: PCT/JP2019/019828
(87) International publication number: WO 2019/239795

(56) References cited:
- EP-A1- 0 173 169
- EP-A1- 2 929 980
- JP-A- 2007 268 625
- JP-A- 2012 166 276
- JP-A- 2012 166 276
- JP-A- 2014 108 490
- JP-A- 2015 020 221
- JP-A- 2015 020 221
- JP-A- H09 280 211

## Description

### FIELD OF THE INVENTION

The present invention relates to a cylinder, and more particularly to a cylinder to be applied to a clamp that fixes a clamp object.

For example, patent literatures 1 and 2 respectively disclose a rotary clamp that fixes a clamp object by turning and lowering a clamp arm. In the rotary clamp, a clamp rod (output member) provided with the clamp arm is inserted in a housing so as to be movable in a vertical direction and so as to be rotatable around an axis. The rotary clamp is provided with a motion detection device that detects an operation of the clamp rod. In the rotary clamp of patent literature 1, the position of the clamp rod is detected by integrally attaching an operation unit to one end part of the clamp rod and by opening and closing inlet holes for pressure fluid supply provided at different positions in the vertical direction. In patent literature 2, the up and down movement of the clamp rod is once converted into movement in a radial direction by the engaging ball, and further, a structure that converts the radial movement of the engaging ball into the up and down movement of a valve body is provided at the one end part of the clamp rod. The valve body opens and closes an opening of pressurized air passage provided toward the vertical direction. JP 2012-166276 A, which forms the basis for the preamble of claim 1, discloses a rod position detector for detecting a position of a clamp rod. EP 2 929 980 A1 discloses a fluid pressure cylinder for detecting the position of a piston member via air pressure that is changed over by a valve mechanism.

### PRIOR ART

### PATENT LITERATURE

Patent literature 1: Japanese Patent Laid Open Publication No. 2003-305626
Patent literature 2: Japanese Patent Laid Open Publication No. 2015-20221

### DISCLOSURE OF THE INVENTION

### PROBLEMS TO BE SOLVED BY THE INVENTION

In the motion detection device of the patent document 1, when the operation unit opens and closes the inlet hole, the operation unit slides around the periphery of the opening of the inlet hole, so that prolonged use may affect the performance of closing the inlet hole. On the other hand, in the motion detection device of the patent document 2, the opening of the pressurized air passage can be opened and closed by the up and down movement of the valve body without sliding as in the patent document 1. However, the valve body is not integrated with the clamp rod, and a mechanical element that transmits the movement of the clamp rod intervenes in the middle, so that there is a problem that it does not necessarily detect the movement of the clamp rod itself. For example, in the patent literature 2, when the valve body causes malfunction due to breakage of the valve body or the like, even if the clamp rod operates normally, it is erroneously detected that the valve body is abnormal.

The aim of the present invention is to directly and accurately detect the movement of the output member itself of the rotary clamp.

### MEANS TO SOLVE THE PROBLEM

In the present invention, which is defined in claim 1, a cylinder having an output member that is moved up and down by a pressure fluid is accommodated in a cylinder hole provided in a housing. The cylinder includes a first valve chamber provided between a lower wall of the housing and the output member, a second valve chamber with the output member hollowed out and opened to the first valve chamber side, and a valve rod protruding from the lower wall to be inserted into the second valve chamber. The valve rod is provided with a valve rod passage opened toward the second valve chamber. Between the valve rod and the second valve chamber, a seal section is provided on an outer peripheral wall side of the valve rod or on an inner peripheral wall side of the second valve chamber. When the valve rod and the second valve chamber move relative to each other, a compressed air flow passage formed between the first valve chamber and the second valve chamber is configured so as to have a close region sealed by the seal section and an open region opened from the seal. Compressed air is supplied from one end of the compressed air flow passage, and the other end of the compressed air flow passage is opened to the outside air.

### EFFECTS OF INVENTION

The motion detection device used in the present invention is configured to avoid sliding on the inlet hole as much as possible although the point that the operation unit is integrally provided to one end part of the output member or clamp rod is the same as that shown in the patent literature 1. Therefore, when the motion detection device is used for a long period of time, it is possible to reduce wear on the outer peripheral wall of the operation unit or the inner peripheral wall of the inlet hole, and the size of the sliding gap formed between the operation unit and the inlet hole can be maintained for a long time. Thus, the movement of the clamp rod can be accurately detected. In addition, in that the operation unit directly opens and closes the valve, the movement of the output member can be detected without interposing the mechanical element for transmitting the movement of the clamp rod as disclosed in the patent literature 2 in the middle.

### BRIEF DESCRIPTION OF THE DRAWINGS

FIG. 1 is a cross-sectional view (unclamping state) of a rotary clamp according to a first embodiment of the present invention.
FIG. 2 is a partial cross-sectional view of the rotary clamp shown in FIG. 1 (an intermediate state between an unclamp state and a clamp state).
FIG. 3 is a partial cross-sectional view (clamp state) of the rotary clamp shown in FIG. 1.
FIGS. 4A to 4C show an embodiment 2 of the present invention, FIG. 4A shows an unclamp state, FIG. 4B shows an intermediate state, and FIG. 4C shows a cross-sectional view of a clamp device in the clamp state.
FIGS 5A to 5C show an embodiment 3 of the present invention, FIG. 5A shows an unclamp state, FIG. 5B shows an intermediate state, and FIG. 5C shows a cross-sectional view of a clamp device in the clamp state.
FIGS. 6A to 6C show an embodiment 4 of the present invention, FIG. 6A shows an unclamp state, FIG. 6B shows an intermediate state, and FIG. 6C shows a cross-sectional view of a clamp device in the clamp state.
FIGS. 7A to 7C show an embodiment 5 of the present invention, FIG. 7A shows an unclamp state, FIG. 7B shows an intermediate state, and FIG. 7C shows a cross-sectional view of a clamp device in the clamp state.
FIGS. 8A to 8C show an embodiment 6 that does not fall under the scope of the claims, FIG. 8A shows an unclamp state, FIG. 8B shows an intermediate state, and FIG. 8C shows a cross-sectional view of a clamp device in the clamp state.
FIG. 9 is an exploded view of a cylinder device according to the embodiment 7 that does not fall under the scope of the claims.
FIGS. l0A to 10C show an embodiment 7 that does not fall under the scope of the claims, FIG. 10A shows an upward advancing state, FIG. 10B shows an intermediate state, and FIG. 10C shows a cross-sectional view of the cylinder device in a descending and retreating state.
FIGS. 11A to 11B show an embodiment 8 of the present invention, and FIG. 11A shows an unclamp state, and FIG. 11B shows a cross-sectional view of a clamp device in the clamp state.

### PREFERRED EMBODIMENT OF THE INVENTION

The present invention includes a first valve chamber provided on a lower side of an output member, a second valve chamber with the output member hollowed out and opened to the first valve chamber side along an axis, and a valve rod protruding from a lower wall of the first valve chamber to be inserted into the second valve chamber. The valve rod is provided with a valve rod passage having one end opened to the second valve chamber. The valve rod and the second valve chamber are relatively moved by the up and down movement of the output member. In this way, a compressed air flow passage through which the compressed air passes is formed between the first valve chamber and the valve rod passage. The compressed air is supplied to one end side (the first valve chamber or the valve rod passage) of the compressed air flow passage, and is discharged to the outside air from the other end side (the valve rod passage or the first valve chamber) of the compressed air flow passage. A seal section for closing the movement of the compressed air is provided between the valve rod and the second valve chamber. A gap between the valve rod and the second valve chamber is formed so that there exist a close region sealed by the seal section and an open region released from the seal when the valve rod and the second valve chamber move relative to each other. In this embodiment, the compressed air flow passage is composed of the gap.

In the open region released from the seal, a region having a different cross-sectional area of the gap maybe provided so as to generate a different pressure loss when the compressed air passes between the valve rod and the second valve chamber in a movement process when the valve rod and the second valve chamber move relative to each other.

A bypass passage leading from the first valve chamber to the valve rod passage is provided on the close region to be sealed, and a predetermined pressure loss by the bypass passage may be generated in the up and down regions of the position where the bypass passage is provided.

When referring to "up" or "down" in this specification, it does not indicate a direction of gravity, the direction in which the output member is drawn into the housing is called "down", and the direction in which the output member is pulled out of the housing is "up".

### FIRST EMBODIMENT

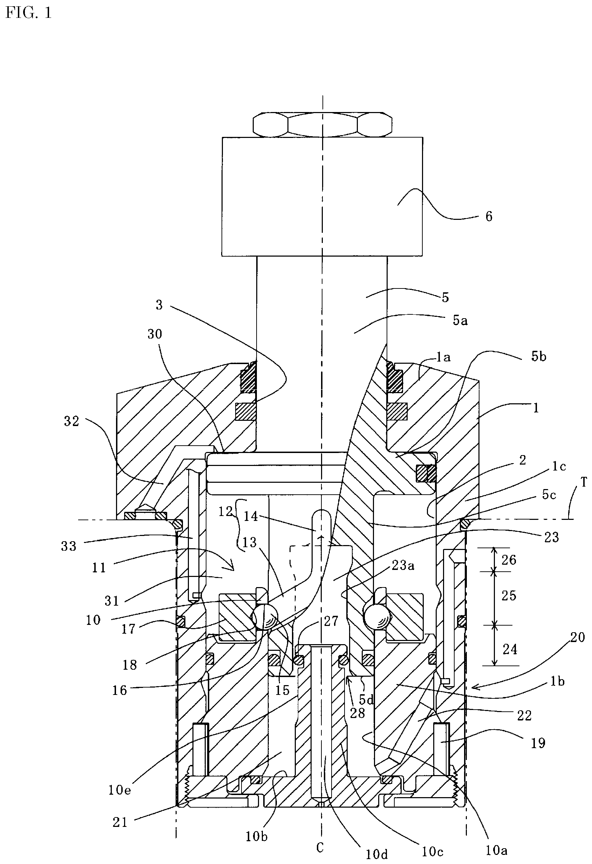

The first embodiment will be described with reference to FIGS. 1 to 3.

First, the overall structure of the rotary clamp will be described with reference to FIG. 1. A housing 1 is fixed to a table T as a fixing base by a plurality of bolts (not shown). The housing 1 includes an upper wall (a distal wall) 1a, a lower wall (a proximal wall) 1b, a barrel wall 1c extending in a vertical direction, and a cylinder hole 2 formed inside the barrel wall 1c.

A part of an output member 5 penetrates outside the housing 1 through a cylindrical hole 3 formed in the upper wall 1a of the housing 1. The output member 5 is hermetically inserted into the cylindrical hole 3 so as to be rotatable around an axis C and so as to be movable in the vertical direction (the direction of the axis C). An arm 6 is fixed to an upper end portion of the output member 5.

The output member 5 includes a rod body 5a, a piston portion 5b having a larger diameter than the rod body 5a, and a lower rod 5c, which are formed in order from the upper side. The lower rod 5c is slidably inserted into a cylindrical hole (bottomed insertion hole) 10a of a support cylinder 10 that forms a part of the lower wall 1b of the housing 1.

A rotary mechanism 11 is provided between the lower rod 5c of the output member 5 and the upper part of the inner wall of the cylindrical hole 10a of the support cylinder 10. The rotary mechanism 11 includes a guide groove 12 and a ball (engaging tool) 15. The guide groove 12 is formed by connecting a spiral rotary groove 13 and a rectilinear groove 14 upward. The ball 15 is inserted into the guide groove 12. The ball 15 is rotatably supported by a support hole 16 provided on the inner wall of the support cylinder 10. A sleeve 17 is rotatably fitted around the axis. A V-shaped groove 18 is formed on the inner peripheral surface of the sleeve 17, and the ball 15 can roll at two points above and below the V-shaped groove 18.

The support cylinder 10 is prevented from rotating around the barrel wall 1c of the housing 1 through a positioning pin 19 extending in the vertical direction to adjust the circumferential position (phase) of the output member 5 with respect to the housing 1.

A clamp chamber 30 is provided between the piston portion 5b and the upper wall 1a of the housing 1. An unclamp chamber 31 is provided between the piston portion 5b and the lower wall 1b of the housing 1. Pressure fluid for clamping (pressure oil, compressed air, etc.) is supplied to and discharged from the clamp chamber 30 through a supply / discharge path 32 formed in the upper wall 1a of the housing 1. Further, pressure fluid for unclamping is supplied to and discharged from the unclamp chamber 31 through another supply / discharge path 33 formed in the barrel wall 1c of the housing 1.

The rotary clamp illustrated in FIG. 1 is in an unclamp state. The pressure fluid is discharged from the clamp chamber 30, and the pressure fluid is supplied to the unclamp chamber 31 through the supply / discharge path 33. The output member 5 is at the upper limit position. When switching to the clamp state, the pressure fluid is discharged from the unclamp chamber 31 through the supply / discharge path 33, and the pressure fluid is supplied to the clamp chamber 30 through the supply / discharge path 32. When the piston portion 5b moves downward, the output member 5 descends while being turned clockwise in plane view along the rotary groove 13. Subsequently, the output member 5 descends straight along the straight groove 14 to be in a clamp state. When switching the rotary clamp from the clamp state to the unclamp state, if the pressure fluid in the clamp chamber 30 is discharged and the pressure fluid is supplied to the unclamp chamber 31, the output member 5 rises straight and then turns.

The lower wall 1b is provided with a cylindrical hole 10a into which the lower rod 5c constituting the lower side of the output member 5 is inserted. The cylindrical hole 10a is a bottomed hole having a bottom 10b. A motion detection device 20 includes a first valve chamber 21 provided between the bottom 10b of the cylindrical hole 10a and the undersurface 5d of the lower rod 5c, and a housing passage 22 provided on the lower wall 1b and supplying compressed air to the first valve chamber 21, a second valve chamber 23 having the lower rod 5c hollowed open downward along the axis C, a valve rod 10c protruding from the bottom 10b to be inserted into the second valve chamber 23, and a valve rod passage 10d leading the second valve chamber 23 to the outside air by penetrating through a top section of the valve rod 10c toward the second valve chamber 23. It is desirable that the opening installation position of the housing passage 22 that opens to the first valve chamber 21 is a position that does not interfere with the operation of the lower rod 5c. As described above, in the present embodiment, one end of the compressed air flow passage formed between the first valve chamber 21 and the valve rod passage 10d is on the first valve chamber 21 side.

The second valve chamber 23 can be divided into a first region 24, a second region 25, and a third region 26 in order from bottom to top depending on the inner diameter of the inner peripheral wall 23a. The second region 25 has the smallest diameter, and the third region 26 has the largest diameter. The first region 24 has a diameter intermediate between the two. A seal section (O-ring) 27 is provided around the top section of the valve rod 10c. When the valve rod 10c and the second valve chamber 23 move relative to each other along the axis C, a gap (the cross-sectional area of the gap around the axis C, hereinafter simply referred to as "gap") between the outer peripheral wall 10e of the valve rod 10c at the position of the seal section 27 and the inner peripheral wall 23a of the second valve chamber 23 is changed. The outer peripheral side of the seal section 27 with respect to the axis C slightly protrudes radially outward from the outer peripheral wall 10e of the valve rod 10c. In the first region 24, the seal section 27 is slightly separated from the inner peripheral wall 23a of the second valve chamber 23. In the second region 25, the seal section 27 is in contact with the inner peripheral wall 23a of the second valve chamber 23, and an effect of sealing the compressed air is exhibited (validated). In the third region 26, the seal section 27 is separated from the inner peripheral wall 23a of the second valve chamber 23. On the other hand, in the first region 24 and the third region 26, an effect of the seal section 27 for sealing the compressed air is invalidated.

Next, the operation of the motion detection device 20 will be described. The compressed air supplied from the housing passage 22 is guided into the first valve chamber 21. In the unclamp state in FIG. 1, a throttle passage (referred to as "throttle passage 28") is formed between the seal section 27 in the first region 24 and the second valve chamber 23, and the compressed air of the first valve chamber 21 is guided to the valve rod passage 10d through the throttle passage 28.

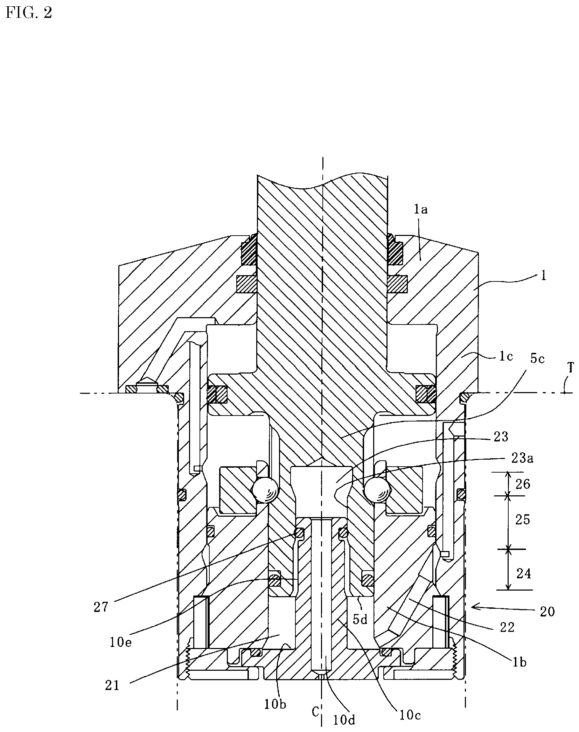

FIG. 2 shows the rotary clamp at the time of transition from the unclamp state to the clamp state. When the lower rod 5c descends and the seal section 27 reaches the second region 25, the flow passage between the first valve chamber 21 and the valve rod passage 10d is shut off.

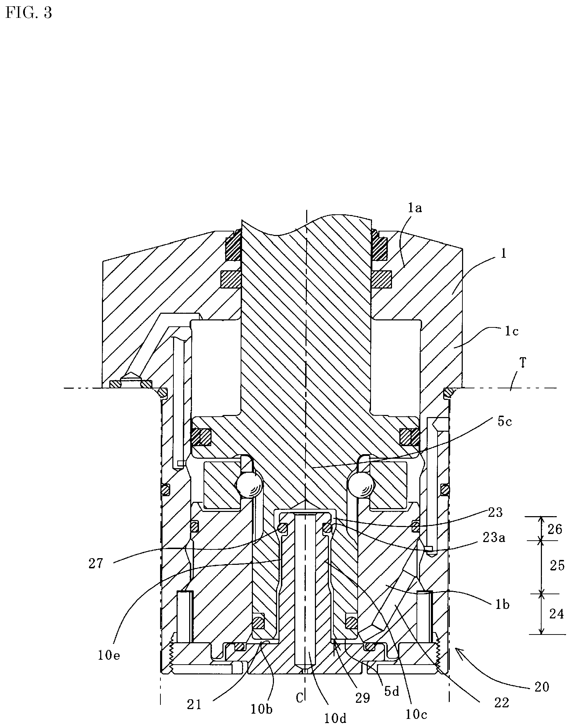

In the clamp state shown in FIG. 3, the lower rod 5c further descends, and the seal section 27 reaches the third region 26. At this time, a flow passage 29 is formed between the seal section 27 and the second valve chamber 23, and the compressed air in the housing passage 22 is discharged outside through the flow passage 29 and the valve rod passage 10d. The cross-sectional area of the gap through which the compressed air passes differs between the throttle passage 28 and the flow passage 29, and the cross-sectional area of the flow passage 29 is larger than that of the throttle passage 28. Therefore, the pressure loss from the housing passage 22 to the valve rod passage 10d is different between the case where the gas flows through the throttle passage 28 and the case where the gas flows through the flow passage 29. In the present embodiment, in case of detecting by providing with a pressure sensor (not shown) for the housing passage 22, when the detection pressure when the seal section 27 is present in the second region 25 is 0.2 MPa, the pressure is 0.15 MPa in the unclamp state of the first region 24 and 0.0 MPa in the clamp state of the third region 26 (back pressure is atmospheric pressure). The position of the output member 5 can be detected by detecting the pressure with the pressure sensor.

In the present embodiment, the second region 25 in which the second valve chamber 23 contacts the seal section 27 is provided in the middle, so that the detection value of the pressure sensor can be greatly changed when the seal section 27 moves from the first region 24 to the second region 25 or from the second region 25 to the third region 26. In addition, since the second valve chamber 23 has no opening in the middle of the height and the seal section 27 does not slide through such an opening, so that the seal section 27 has little effect on the sealing performance. Further, since the seal section 27 is in contact with the inner peripheral wall 23a of the second valve chamber 23 only when the clamp state is changed, and is present in the first region 24 or the third region 26 during most of the normal time and not in a state of being compressed and deformed, the deterioration of the seal performance is small. In the first region 24, the output member 5 turns around the axis C. At this time, since the seal section 27 is separated from the valve rod 10c, wear and breakage of the seal section 27 due to the rotary movement are prevented.

In the above embodiment, although the second valve chamber 23 is divided into the first region 24, the second region 25, and the third region 26 in order from bottom to top according to the inner diameter, the order of the inner diameter may be different. For example, if the diameter is reduced in order from bottom to top, there is an advantage that the processing of the second valve chamber 23 is easy.

### SECOND EMBODIMENT

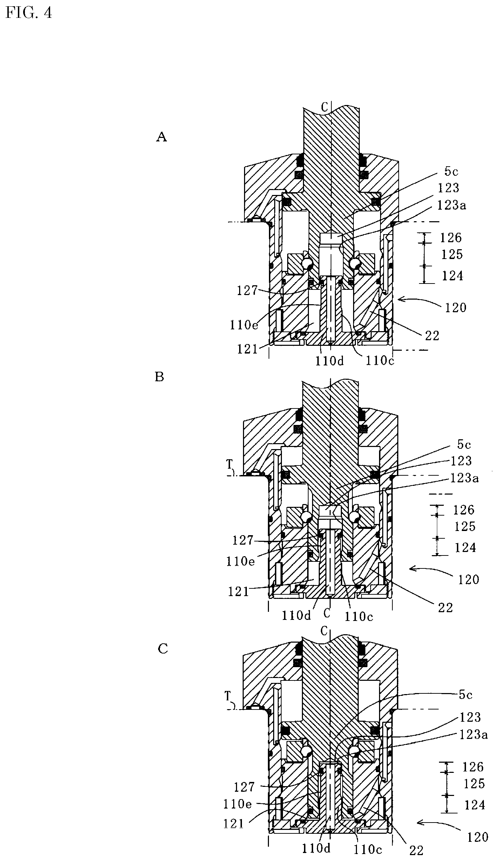

FIG. 4 shows another configuration example of a motion detection device 120. A second valve chamber 123 of the motion detection device 120 is divided into a first region 124, a second region 125, and a third region 126 in order from bottom to top by its inner diameter similarly to the second valve chamber 23 of the first embodiment. The second region 125 has the largest diameter, the third region 126 has the smallest diameter, and the first region 124 has an intermediate diameter. Other configurations are the same as in the first embodiment.

Next, the operation of the motion detection device 120 will be described. In the unclamp state of FIG. 4A, the compressed air in a first valve chamber 121 is guided to a valve rod passage 110d through a gap between a seal section 127 and the second valve chamber 123 in the first region 124. As shown in FIG. 4B, when the lower rod 5c descends and the seal section 127 reaches the second region 125, a gap between the first valve chamber 121 and the valve rod passage 110d becomes larger and the pressure loss is reduced compared to the case of the first region 124.

In the clamp state of FIG. 4C, although the seal section 127 has reached the third region 126, the gap between the seal section 127 and the second valve chamber 123 is closed. In this embodiment, the pressure detected by a pressure sensor (not shown) provided to the housing passage 22 is the highest when the position of the seal section 127 is in the third region 126, and the next is when the seal section 127 is present in the first region 124. When the seal section 127 is in the second region 125, the pressure detected by the pressure sensor becomes the lowest. In this embodiment, in the second region 125, since the seal section 127 does not contact with the inner peripheral wall 123a of the second valve chamber 123, the seal section 127 can be prevented from being slid while the output member 5 is descending.

### THIRD EMBODIMENT

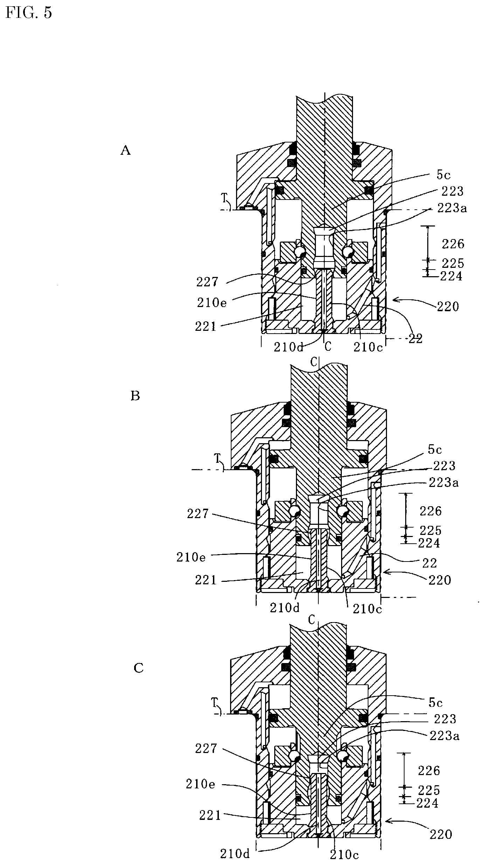

FIG. 5 illustrates a configuration example of a motion detection device 220 according to the third embodiment. A second valve chamber 223 of the motion detection device 220 is divided into a first region 224, a second region 225, and a third region 226 in order from bottom to top by its inner diameter, similarly to the second valve chamber 123 of the second embodiment. The second region 225 has the largest diameter, the third region 226 has the smallest diameter, and the first region 224 has an intermediate diameter. On the other hand, a valve rod 210c is composed of an elastic body. The valve rod 210c has a seal section 227 with an enormous diameter around the top of the head, and therefore, the present example differs from the examples described so far in that the seal section 227 is not a separate member made from an O-ring. In the unclamp state shown in FIG. 5A, the compressed air in the first valve chamber 221 is guided to the valve rod passage 210d through a gap between the seal section 227 and the second valve chamber 223 in the first region 224. As shown in FIG. 5B, when the lower rod 5c descends and the seal section 227 reaches the second region 225, a gap between the inner peripheral wall 223a of the second valve chamber 223 and the valve rod 210c becomes larger and the pressure loss is reduced compared to the case of the first region 124.

In the clamp state shown in FIG. 5C, although the seal section 227 has reached the third region 226, the gap between the seal section 227 and the second valve chamber 223 is closed. In this embodiment, the pressure detected by the pressure sensor is the highest when the position of the seal section 227 is in the third region 226, and it becomes the second highest when the seal section 227 is in the first region 224. When the seal section 227 is in the second region 225, the pressure detected by the pressure sensor becomes the lowest.

### FORTH EMBODIMENT

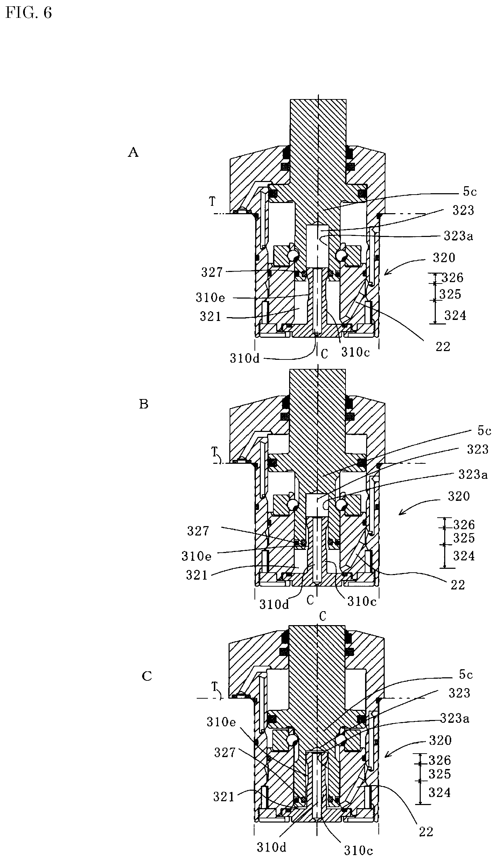

In the first embodiment, the second valve chamber 23 was divided into the first region 24, the second region 25, the third region 26, and the like in order from bottom to top according to its inner diameter, and the pressure loss was changed or the communication to the valve rod passage 10d was closed depending on the position of the seal section 27 of the valve rod 10c. In this embodiment, as shown in FIG. 6, the outer diameter on the valve rod 310c side is changed in three steps from the bottom, namely, a first region 324, a second region 325, and a third region 326. Here, the second region 325 has the smallest outer diameter, the third region 326 has the largest outer diameter, and the first region 324 has an intermediate outer diameter. A seal section 327 is provided on an inner peripheral wall 323a near the outlet on the second valve chamber 323 side.

In the unclamp state shown in FIG. 6A, a gap between the first valve chamber 321 and the second valve chamber 323 is closed by the third region 326 and the seal section 327. As shown in FIG. 6B, when the lower rod 5c descends and the seal section 327 reaches the second region 325, a gap is generated between the second valve chamber 323 and the valve rod 310c.

In the clamp state shown in FIG. 6C, the seal section 327 has reached the first region 324. A gap between the seal section 327 and the valve rod 310c is smaller than the second region 325. At the position of the second region 325, the gap with the seal section 327 may be referred to as a simple flow passage in relation to another passage, and it is the first region 324 that is referred to as a throttle passage. These have different cross sections of the gap, and pressure loss is smaller in the flow passage than in the throttle passage.

The shape of the inner peripheral wall 323a of the second valve chamber 323 and the shape of the outer peripheral wall 310e of the valve rod 310c may be designed with an outer diameter so that the pressure loss is different depending on the position of the lower rod 5c, or may be provided with the seal section 327 that shuts off the gap between the first valve chamber 321 and the rod passage 310d on the second valve chamber 323 side or the valve rod 310c side.

### FIFTH EMBODIMENT

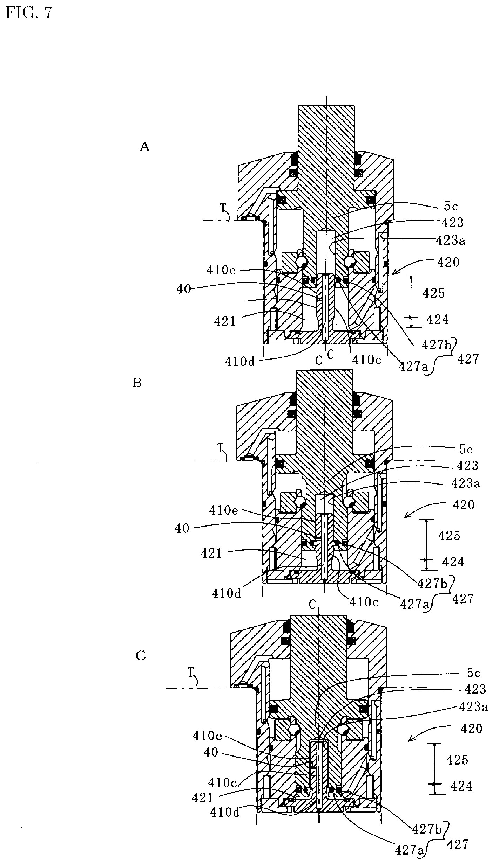

FIG. 7 shows a configuration example of the motion detection device according to the fifth embodiment.

Although the first embodiment is an example wherein regions having different cross sections of the gap were provided so as to generate different pressure losses when the compressed air passes through between the valve rod 10c and the second valve chamber 23 when the valve rod 10c and the second valve chamber 23 relatively move in a region where the closing by the seal section 27 is invalid, the present embodiment is an example wherein a bypass passage 40 leading from the first valve 421 to the valve rod passage 410d is provided in a region where the closing by the seal section 427 is effective, and a predetermined pressure loss due to the bypass passage 40 occurs in the upper and lower regions of the position where the bypass passage 40 is provided.

In the present embodiment, the valve rod 410c is divided into a first region 424 and a second region 425 by its outer diameter. The first region 424 has a smaller outer diameter than the second region 425, and a gap is formed between a seal section provided on an inner peripheral wall 423a side of a second valve chamber 423 and an outer periphery of a valve rod.

In the second region, an outer peripheral wall of a valve rod 410c contacts the seal section 427 provided on the inner peripheral wall 423a side of the second valve chamber 423. In the middle of the height of the second region, there is the bypass passage 40 penetrating from the outer peripheral wall of the valve rod 410c to the valve rod passage 410d.

In the unclamp state shown in FIG. 7A, the seal section 427 provided on the inner peripheral wall of the second valve chamber 423 is located above the bypass passage 40 in the second region 425. Although the compressed air in the first valve chamber 421 is prevented from entering the second valve chamber 423 side by the seal section 427, the compressed air is guided to the valve rod passage 410d through the bypass passage 40. As shown in FIG. 7B, when the lower rod 5c descends and the seal section 427 reaches the second region 425 below the bypass passage 40, the first valve chamber 421 cannot be interconnected to the valve rod passage 410d through the bypass passage 40 to close between the first valve chamber 421 and the valve rod passage 410d.

In the clamp state shown in FIG. 7C, the seal section 427 reaches the first region 424. In the first region 424, the valve rod 410c is not in contact with the seal section 427, so that the sealing performance of the seal section 427 is invalidated, and the first valve chamber 421 and the second valve chamber 423 communicate through the gap between the outer peripheral wall 410e and the inner peripheral walls 423a. Further, since the outer diameter of the valve rod 410c in the second region 425 is smaller than the inner diameter of the second valve chamber 423, the compressed air in the first valve chamber 421 reaches the valve rod passage 410d opened at the top of the valve rod 410c. At this time, by setting the hole diameter of the bypass passage 40 so that the pressure loss from the first valve chamber 421 to the valve rod passage 410d is smaller than the pressure loss when passing through the bypass passage 40, the unclamp state in FIG. 7A and the clamp state in FIG. 7C can be distinguished by the detection value of a pressure sensor (not shown).

In this embodiment, although the seal section 427 slides on the bypass passage 40, since the hole diameter of the bypass passage 40 may be smaller than the opening for supplying the compressed air, the hole diameter of the bypass passage 40 has little effect on the performance of the seal section 427. Further, by inserting the spacer 427b on the side of the seal section 427 that is contact with the valve rod 410c as a double structure of an elastic body 427a and a spacer 427b with a low coefficient of friction, the effect on the performance of the seal section 427 is further reduced.

### SIXTH EMBODIMENT

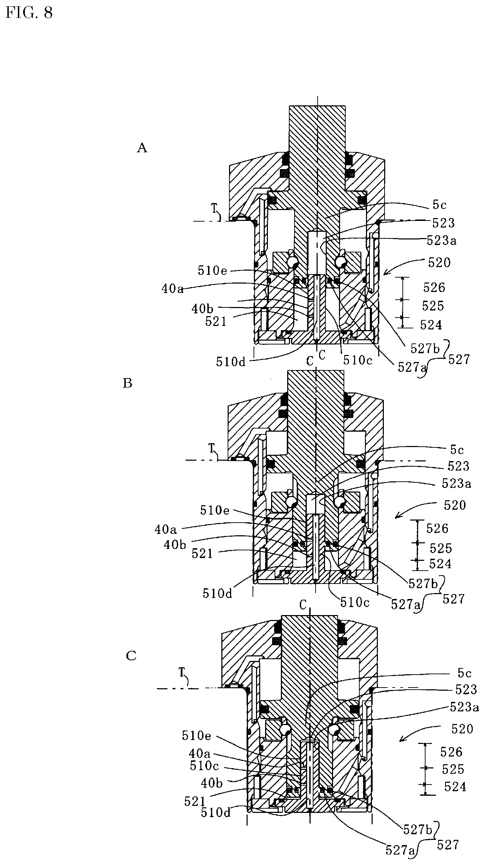

FIG. 8 shows a configuration example of a motion detection device 520 according to the sixth embodiment, that does not fall under the scope of the claims. In the sixth embodiment, a sheath chamber 523 in which the lower rod 5c is opened in a hollow shape downward along the axis C does not have a function as a valve chamber through which compressed air flows. The sheath chamber 523 provides a bag-shaped space in which a mere valve rod 510c can be inserted and compressed air cannot leak. On the other hand, the bypass passages 40a, 40b are provided so as to lead from the first valve chamber 521 to the valve rod passage 510d. The bypass passages 40a, 40b are set up and down, in which a predetermined pressure loss is caused by blocking all or one of the bypass passages 40a, 40b from the communication with the first valve chamber 521 at the position of the seal section 527 by the up and down movement of the lower rod 5c.

In this embodiment, the valve rod 510c is divided into a first region 524, a second region 525, and a third region 526 from bottom to top depending on the positions of the bypass passages 40a, 40b. The first region 524 is below the bypass passage 40b, the second region 525 is between the bypass passage 40a and the bypass passage 40b, and the second region 526 is above the bypass passage 40a. The bypass passages 40a, 40b penetrate from the outer peripheral wall of the valve rod 510c to the valve rod passage 510d. The seal section 527 provided at the inlet of the sheath chamber 523 is to block direct communication between the first valve chamber 521 and the sheath chamber 523. The seal section 527 has a double structure of an elastic body 527a and a spacer 527b with a low coefficient of friction.

In the unclamping state shown in FIG. 8A, the seal section 527 is located in a third region 526 above the bypass passage 40a. The compressed air in a first valve chamber 521 is guided to a valve rod passage 510d through the bypass passages 40a, 40b. As shown in FIG. 8B, when the lower rod 5c descends and the seal section 527 reaches the second region 525, the bypass passage 40a cannot communicate with the first valve chamber 521 and the valve rod passage 510d, and the communication state is established only by the bypass passage 40b.

In the clamp state shown in FIG. 8C, the seal section 527 reaches the first region 524. In the first region 524, neither of the bypass passages 40a, 40b can communicate with the first valve chamber 521 and the valve rod passage 510d. By providing the bypass passages 40a, 40b above and below the valve rod 510c, the pressure loss is changed by changing the number of bypass passages 40a, 40b that communicate with the first valve chamber 521 and the valve rod passage 510d. This pressure change can be distinguished by a detection value of a pressure sensor (not shown). In the present embodiment, although there are two bypass passages 40a, 40b, a plurality of bypass passages may be provided. In the present embodiment, although the valve rod passage 510d provided in the length direction of the valve rod 510c opens toward the sheath chamber 523, if there is another passage that leads the air in the sheath chamber 523 to the outside air, there is no need to open the sheath chamber 523 because the valve rod passage 510d does not play the role. In the present embodiment, the cross section of the bypass passage 40a and the cross section of the bypass passage 40b may be the same or different.

### SEVENTH EMBODIMENT

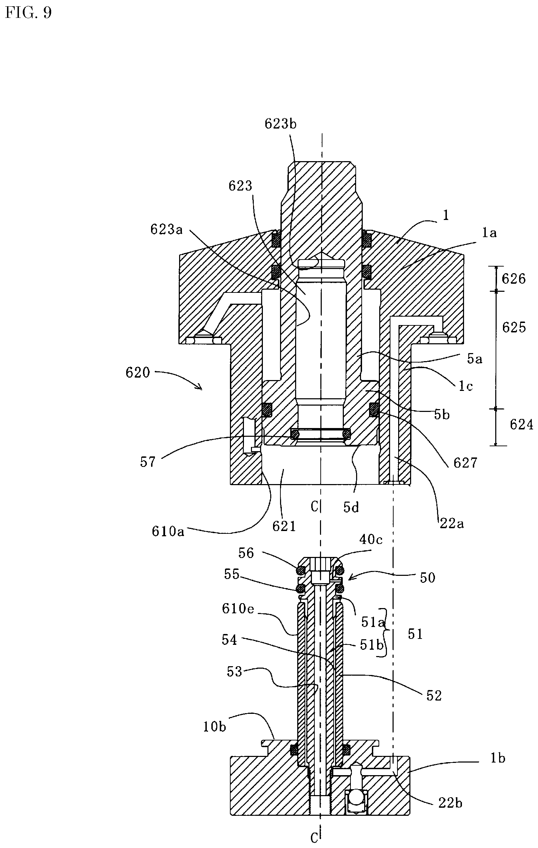

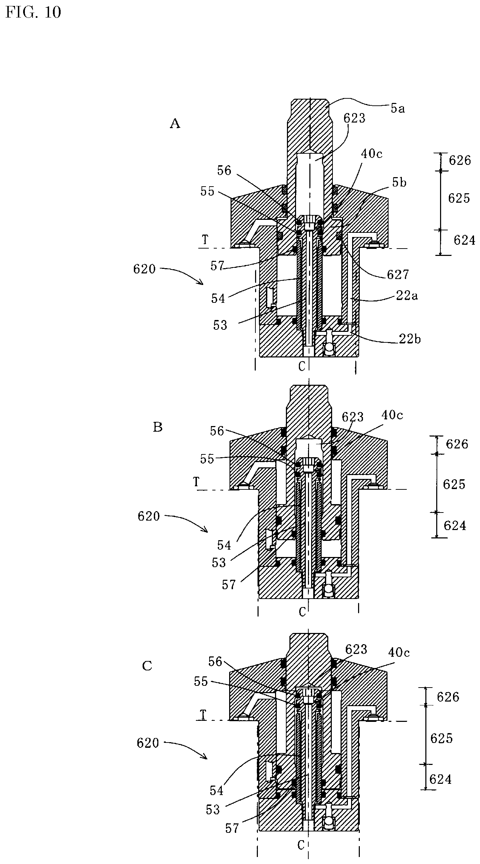

Each of FIGS. 9, 10 shows a configuration example of a motion detection device 620 according to the seventh embodiment, that does not fall under the scope of the claims. The cylinder device shown in the seventh embodiment is applicable to both a push type cylinder and a pull type cylinder. In the fifth embodiment, the first valve chamber 421 is used as a passage of the compressed air. However, in the present embodiment, the compressed air does not go through a space 621 (corresponding to the first valve chamber of the previous embodiments) provided between the bottom 10b of the lower wall 1b and the undersurface 5d of the lower rod 5c. In this embodiment, two systems of a first valve rod passage 53 and a second valve rod passage 54 are provided in the valve rod 50, one of which is on the compressed air supply side and the other is on the discharge side.

FIG. 9 is an exploded view in which the lower wall 1b of the housing 1 is exploded from the upper wall 1a and the barrel wall 1c for ease of explanation. When the lower wall 1b is connected to the upper wall 1a and the barrel wall 1c, a housing passage 22a is connected to a housing passage 22b. A second valve chamber 623 is formed from the piston portion 5b and the rod body 5a constituting the output member 5. The second valve chamber 623 can be divided into a first region 624, a second region 625, and a third region 626 in order from bottom to top depending on the inner diameter. The diameter of the second region 625 is large, and the diameters of the first region 624 and the third region 626 are small.

A first valve rod passage 53 and a second valve rod passage 54 that open toward the second valve chamber 623 are provided coaxially on the valve rod 50 protruding from the lower wall 1b. The first valve rod passage 53 opens toward a bottom surface 623b of the second valve chamber 623, and the second valve rod passage 54 opens toward an inner peripheral wall 623a of the second valve chamber 623. The valve rod 50 has a double structure that the outer rod 52 inserts the inner rod 51, and a gap between the outer rod 52 and the inner rod 51 forms the second valve rod passage 54. A leading edge of the inner rod 51 is out of surrounding of the outer rod 52 and exposed in an enormous shape to form a head end 51a of the valve rod 50.

Apair of seal sections (O-rings) 55, 56 are provided around the head end 51a of the valve rod 50 so as to have different heights, respectively. Between the seal section 55 and the seal section 56, a bypass passage 40c penetrating from the first valve rod passage 53 toward the inner peripheral wall 623a of the second valve chamber is provided. A seal section 57 provided around the inlet of the second valve chamber 623 contacts on an outer peripheral wall 610 e of the outer rod 52 to seal the second valve chamber 623 from the space 621.

FIG. 10 shows a movement when the valve rod 50 and the second valve chamber 623 relatively move along the axis C. In an up-advance state of the output member 5 shown in FIG. 10A, the seal section 55 is located at a position corresponding to the first region 624, and the second valve rod passage 54 is prevented from communication with the second valve chamber 623 and the first valve rod passage 53 when the seal section 55 is blocked. In the state of the output member 5 in the middle of descending, which is shown in FIG. 10B, when the seal section 55 and the seal section 56 reach the second region 625, the second valve rod passage 54 leads to the valve chamber 623 side without being blocked by the seal sections 55, 56. Since the first valve rod passage 53 is open to the second valve chamber 623, the first valve rod passage 53 and the second valve rod passage 54 are in communication.

In the state of the descending and retreating output member 5 shown in FIG. 10C, the seal section 56 reaches the third region 626. In the third region 626, the second valve rod passage 54 is prevented from leading to the second valve chamber 623 by blocking the seal section 56. On the other hand, since the bypass passage 40c is located between the seal sections 55, 56 and not closed by the seal section 55, the first valve rod passage 53 and the second valve rod passage 54 are communicated by the bypass passage 40c in a state where the passage is throttled. The throttle of the bypass passage 40c causes a predetermined pressure loss. In this way, the close state is created in the first region 624, the communicating state is created in the second region 625, and the throttled state is created in the third area 626, and this pressure change can be distinguished by a detection valve of a pressure sensor (not shown).

In the present embodiment, when the bypass passage is not provided, the compressed air passage is blocked in the above-mentioned up-advance state or down-retreat state, and is opened halfway. In this case, the seal sections 55, 56 are not one pair, and only one of the seal sections 55, 56 may be provided.

### EIGHTH EMBODIMENT

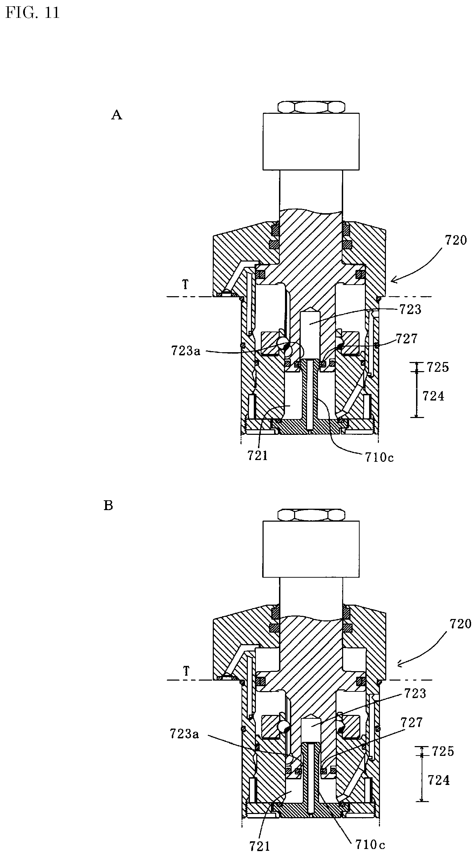

FIG. 11 shows a configuration example of a motion detection device 720 according to the eighth embodiment.

In this embodiment, when an outer diameter of a valve rod 710c side is changed in two steps from the bottom and a first region 724 and a second region 725 are respectively set, the outer diameter of the first region 724 is the smallest, and the second region 725 has the largest outer diameter. A seal section 727 is provided on an inner peripheral wall 723a near an outlet on a second valve chamber 723 side. The seal section 727 has a double structure including an elastic body and a spacer having a small friction coefficient.

In an extended state shown in FIG. 11A, a space between a first valve chamber 721 and the second valve chamber 723 is closed by the second region 725 and the seal section 727. As shown in FIG. 11B, when the lower rod 5c descends and the seal section 727 reaches the first region 724, a gap is generated between the second valve chamber 723 and the valve rod 710c. There is a gap between the second region 725 of the valve rod 710c and the second valve chamber 723, and the first valve chamber 721 and the second valve chamber are in communication.

Each embodiment and each modification can be further changed as follows. In the above embodiments, one end sides of the compressed air flow passages formed between the first valve chambers 21, 121, 221, 321, 421, 521 and the valve rod passages 10d, 110d, 210d, 310d, 410d, 510d side are on the first valve chamber 21, 121, 221, 321, 421, 521 sides, respectively, or vice versa. In the seventh embodiment, one of the first valve rod passage 53 and the second valve rod passage 54 may be set to one end of the compressed air flow passage, and the other may be set to the other end side. In the seventh embodiment, the first valve rod passage 53 and the second valve rod passage 54 are provided coaxially, but need not be coaxial. For example, the first valve rod passage 53 and the second valve rod passage 54 may be long holes formed in the inside of the valve rod 50 in the longitudinal direction, and these long holes may not be parallel.

In the above embodiments, the output member 5 may be turned in the counterclockwise direction in plane view instead of turning in the clockwise direction in plane view in driving the clamp. Further, it is needless to say that the turning angle of the output member 5 can be set to a desired angle such as 90 degrees. Although the output member 5 has the piston portion 5b integrally, as disclosed in the patent literature 1, the piston portion 5b may be provided separately and may be configured to move up and down so as not to follow the turning movement of the output member 5.

Further, the guide groove 12 is constituted by the illustrated spiral rotary groove 13 and the straight rectilinear groove 14, but the rectilinear groove 14 may be omitted. Further, although the double-acting type for supplying the pressurized fluid to the unclamp chamber and the clamp chamber is shown, a single-acting type may be used instead. In addition, although the output member is driven by the pressure fluid, it may be an electric actuator. In addition, it goes without saying that various changes can be made within a range that can be assumed by those skilled in the art.

In each embodiment, instead of providing a pressure sensor for measuring the pressure in the passage on the side where the compressed air enters (for example, on the housing passage 22 side), the pressure sensor may be provided on the side where the compressed air exits (for example, on the valve rod passage 10d side).

### DESCRIPTION OF SYMBOLS

1 housing
1a upper wall
1b lower wall
1c barrel wall
2 cylinder hole
3 cylindrical hole
5 output member
5a rod body
5b piston portion
5c lower rod
5d undersurface
6 arm
10 support cylinder
10a cylinder hole
10b bottom
10c, 110c, 210c, 310c, 410c, 510c, 710c valve rod
10d, 110d, 210d, 310d, 410d, 510d valve rod passage
10e, 110e, 210e, 310e, 410e, 510e, 610e outer peripheral wall
11 rotary mechanism
12 guide groove
13 rotary groove
14 rectilinear groove
15 ball
16 supporting hole
17 sleeve
18 V-shaped groove
19 pin
20, 120, 220, 320, 420, 520, 620, 720 motion detection device
21, 121, 221, 321, 421, 521, 721 first valve chamber
22, 22a, 22b housing passage
23, 123, 223, 323, 423, 623, 723 second valve chamber
23a, 123a, 223a, 323a, 423a, 523a, 623a, 723a inner peripheral wall
24, 124, 224, 324, 424, 524, 624, 724 first region
25, 125, 225, 325, 425, 525, 625, 725 second region
26, 126, 226, 326, 526, 626 third region
27, 127, 227, 327, 427, 527, 727 seal section
28 throttle passage
29 flow passage
30 clamp chamber
31 unclamp chamber
32, 33 discharge path
40, 40a, 40b, 40c bypath passage
50 valve rod
51 inner rod
51a head end
52 outer rod
53 first valve rod passage
54 second valve rod passage
55, 56, 57 seal section
427a, 527a elastic body
427b, 527b spacer
523 sheath chamber
621 space
623a inner peripheral wall
623b bottom surface
C axis
T table

## Claims

1. A cylinder having an output member (5) accommodated in a cylinder hole (2) provided in a housing (1) and moved up and down by a pressure fluid, comprising:
a first valve chamber (21, 121, 221, 321, 421, 721) provided between a lower wall (1b) of the housing (1) and the output member (5);
a second valve chamber (23, 123, 223, 323, 423, 723) being hollowed out of the output member (5) so as to be provided open toward the first valve chamber (21, 121, 221, 321, 421, 721);
a valve rod (10c, 110c, 210c, 310c, 410c, 710c) protruding from the lower wall (1b) to be inserted into the second valve chamber (23, 123, 223, 323, 423, 723),
said valve rod (10c, 110c, 210c, 310c, 410c, 710c) comprising:
a valve rod passage (10d, 110d, 210d, 310d, 410d) provided open toward the second valve chamber (23, 123, 223, 323, 423, 723); and
a seal section (27, 127, 227, 327,427, 727) provided on an outer peripheral wall side of the valve rod (10c, 110c, 210c, 310c, 410c, 710c) or an inner peripheral wall side (10e, 110e, 210e, 310e, 410e) of the second valve chamber (23, 123, 223, 323, 423, 723) between the valve rod (10c, 110c, 210c, 310c, 410c, 710c) and the second valve chamber (23, 123, 223, 323, 423, 723),
**characterized in that**
a compressed air flow passage formed between the first valve chamber (21, 121, 221, 321, 421, 721) and the second valve chamber (23, 123, 223, 323, 423, 723) is configured so as to have a close region sealed by the seal section (27, 127, 227, 327, 427, 727) and an open region released from sealing when the valve rod (10c, 110c, 210c, 310c, 410c, 710c) and the second valve chamber (23, 123, 223, 323, 423, 723) move relative to each other,
wherein compressed air is supplied from one end of the compressed air flow passage, and the other end of the compressed air flow passage is open to an outside air.

2. The cylinder according to claim 1, wherein the opening region released from sealing includes regions each having a different cross-sectional area of a gap provided between the valve rod (10c, 110c, 210c, 310c) and the second valve chamber (23, 123, 223, 323) so as to cause different pressure losses when the compressed air passes through the gap in a process of movement when the valve rod (10c, 110c, 210c, 310c) and the second valve chamber (23, 123, 223, 323) move relative to each other.

3. The cylinder according to claim 1, wherein a bypass passage (40) connecting the first valve chamber (421) and the valve rod passage (410d) is provided for the region to be sealed, and a predetermined pressure loss by the bypass passage occurs on a region above and below a position where the bypass passage is provided.

## Patentansprüche

1. Zylinder mit einem Ausgangsbauteil (5), das in einem Zylinderloch (2), das in einem Gehäuse (1) vorgesehen ist, untergebracht ist und durch ein Druckfluid auf und ab bewegt wird, mit:
einer ersten Ventilkammer (21, 121, 221, 321, 421, 721), die zwischen einer unteren Wand (1b) des Gehäuses (1) und dem Ausgangsbauteil (5) vorgesehen ist;
einer zweiten Ventilkammer (23, 123, 223, 323, 423, 723), die aus dem Ausgangsbauteil (5) ausgehöhlt ist, so dass sie in Richtung der ersten Ventilkammer (21, 121, 221, 321, 421, 721) offen vorgesehen ist;
einer Ventilstange (10c, 110c, 210c, 310c, 410c, 710c), die von der unteren Wand (1b) vorsteht, so dass sie in die zweite Ventilkammer (23, 123, 223, 323, 423, 723) eingefügt ist, und die aufweist:
einen Ventilstangendurchlass (10d, 110d, 210d, 310d, 410d), der in Richtung der zweiten Ventilkammer (23, 123, 223, 323, 423, 723) offen vorgesehen ist; und
einen Dichtungsabschnitt (27, 127, 227, 327, 427, 727), der auf einer Außenumfangswandseite der Ventilstange (10c, 110c, 210c, 310c, 410c, 710c) oder einer Innenumfangswandseite (10e, 110e, 210e, 310e, 410e) der zweiten Ventilkammer (23, 123, 223, 323, 423, 723) zwischen der Ventilstange (10c, 110c, 210c, 310c, 410c, 710c) und der zweiten Ventilkammer (23, 123, 223, 323, 423, 723) vorgesehen ist, **dadurch gekennzeichnet, dass**
ein Druckluftströmungsdurchlass, der zwischen der ersten Ventilkammer (21, 121, 221, 321, 421, 721) und der zweiten Ventilkammer (23, 123, 223, 323, 423, 723) ausgebildet ist, so ausgebildet ist, dass er einen Schließbereich, der durch den Dichtungsabschnitt (27, 127, 227, 327, 427, 727) abgedichtet wird, und einen Offenbereich, der von einer Dichtung befreit ist, aufweist, wenn sich die Ventilstange (10c, 110c, 210c, 3 10c, 410c, 710c) und die zweite Ventilkammer (23, 123, 223, 323, 423, 723) relativ zueinander bewegen,
bei dem Druckluft von einem Ende des Druckluftströmungsdurchlasses zugeführt wird, und das andere Ende des Druckluftströmungsdurchlasses zu einer Außenluft offen ist.

2. Zylinder nach Anspruch 1, bei dem der Offenbereich, der von einer Dichtung befreit ist, Bereiche aufweist, die jeweils eine unterschiedliche Querschnittsfläche einer Lücke, die zwischen der Ventilstange (10c, 110c, 210c, 310c) und der zweiten Ventilkammer (23, 123, 223, 323) vorgesehen ist, aufweisen, so dass unterschiedliche Druckverluste bewirkt werden, wenn die Druckluft in einem Bewegungsprozess durch die Lücke verläuft, wenn sich die Ventilstange (10c, 110c, 210c, 310c) und die zweite Ventilkammer (23, 123, 223, 323) relativ zueinander bewegen.

3. Zylinder nach Anspruch 1, bei dem ein Umgehungsdurchlass (40), der die erste Ventilkammer (421) und den Ventilstangendurchlass (410d) verbindet, für den abzudichtenden Bereich vorgesehen ist, und ein vorbestimmter Druckverlust durch den Umgehungsdurchlass auf einem Bereich über und unter einer Position, an der der Umgehungsdurchlass vorgesehen ist, auftritt.

## Revendications

1. Vérin ayant un élément de sortie (5) logé dans un trou de vérin (2) pourvu dans un boîtier (1) et déplacé vers le haut et vers le bas par un fluide sous pression, comprenant :
une première chambre de soupape (21, 121, 221, 321, 421, 721) pourvue entre une paroi inférieure (1b) du boîtier (1) et l'élément de sortie (5) ;
une deuxième chambre de soupape (23, 123, 223, 323, 423, 723) est creusée dans l'élément de sortie (5) de manière à être ouverte vers la première chambre de soupape (21, 121, 221, 321, 421, 721) ;
une tige de soupape (10c, 110c, 210c, 310c, 410c, 710c) faisant saillie de la paroi inférieure (1b) pour être insérée dans la deuxième chambre de soupape (23, 123, 223, 323, 423, 723), ladite tige de soupape (10c, 110c, 210c, 310c, 410c, 710c) comprenant :
un passage de tige de soupape (10d, 110d, 210d, 310d, 410d) ouvert vers la deuxième chambre de soupape (23, 123, 223, 323, 423, 723) ; et
une section d'étanchéité (27, 127, 227, 327,427, 727) prévue sur un côté de la paroi périphérique extérieure de la tige de soupape (10c, 110c, 210c, 310c, 410c, 710c) ou sur un côté de paroi périphérique intérieure (10e, 110e, 210e, 310e, 410e) de la deuxième chambre de soupape (23, 123, 223, 323, 423, 723) entre la tige de soupape (10c, 110c, 210c, 310c, 410c, 710c) et la deuxième chambre de soupape (23, 123, 223, 323, 423, 723),
**caractérisé en ce que**
un passage de flux d'air comprimé formé entre la première chambre de soupape (21, 121, 221, 321, 421, 721) et la seconde chambre de soupape (23, 123, 223, 323, 423, 723) est configuré de manière à avoir une région fermée scellée par la section d'étanchéité (27, 127, 227, 327, 427, 727) et une région ouverte libérée de l'étanchéité lorsque la tige de soupape (10c, 110c, 210c, 310c, 410c, 710c) et la deuxième chambre de soupape (23, 123, 223, 323, 423, 723) se déplacent l'une par rapport à l'autre,
dans lequel l'air comprimé est fourni par une extrémité du passage d'air comprimé, et l'autre extrémité du passage d'air comprimé est ouverte à l'air extérieur.

2. Vérin selon la revendication 1, dans lequel la région d'ouverture libérée de l'étanchéité comprend des régions ayant chacune une surface de section transversale différente d'un espace pourvu entre la tige de soupape (10c, 110c, 210c, 310c) et la deuxième chambre de soupape (23, 123, 223, 323) de manière à provoquer des pertes de pression différentes lorsque l'air comprimé passe à travers l'espace dans un processus de mouvement lorsque la tige de soupape (10c, 110c, 210c, 310c) et la deuxième chambre de soupape (23, 123, 223, 323) se déplacent l'une par rapport à l'autre.

3. Vérin selon la revendication 1, dans lequel un passage de dérivation (40) reliant la première chambre de soupape (421) et le passage de tige de soupape (410d) est pourvu pour la région à sceller, et une perte de pression prédéterminée par le passage de dérivation se produit dans une région au-dessus et au-dessous d'une position où le passage de dérivation est prévu.
